# EUROPÄISCHE PATENTSCHRIFT

(11) **EP 3 077 892 B1**
(45) Veröffentlichungstag und Bekanntmachung des Hinweises auf die Patenterteilung: **06.11.2019**
(21) Anmeldenummer: 14806556.8
(22) Anmeldetag: 17.11.2014
(51) Int. Cl.: G06F 3/023, G06F 3/0488, G06F 3/0482, B60K 35/00, B60K 37/06, G01C 21/36

(54) **KRAFTFAHRZEUG-BEDIENVORRICHTUNG MIT BERÜHRUNGSSENSITIVER EINGABEFLÄCHE**
MOTOR VEHICLE CONTROL APPARATUS WITH TOUCH-SENSITIVE INPUT PANEL
DISPOSITIF DE COMMANDE DE VÉHICULE AUTOMOBILE COMPORTANT UNE SURFACE D'ENTRÉE TACTILE

(30) Priorität: 05.12.2013 DE 102013224979
(43) Veröffentlichungstag der Anmeldung: 12.10.2016
(73) Patentinhaber: Volkswagen Aktiengesellschaft, 38440 Wolfsburg (DE)
(72) Erfinder: CZELNIK, Mark, Peter, 38444 Wolfsburg (DE)
(86) Internationale Anmeldenummer: PCT/EP2014/074776
(87) Internationale Veröffentlichungsnummer: WO 2015/082202

(56) Entgegenhaltungen:
- EP-A2- 1 205 836
- WO-A1-2014/060069
- DE-A1-102011 017 261
- JP-A- 2012 068 706
- US-A1- 2008 077 318

## Beschreibung

Die Erfindung betrifft eine Bedienvorrichtung für ein Kraftfahrzeug, mittels welcher für die Kraftfahrzeugkomponente eine Eingabe getätigt werden kann, die einen Eingabetext umfasst. Beispielsweise kann mittels der Bedienvorrichtung ein Navigationsziel in einem Navigationsgerät des Kraftfahrzeugs eingegeben werden. Die Bedienvorrichtung weist hierzu eine Anzeigeeinrichtung und eine berührungssensitive Eingabefläche auf. Auf der Eingabefläche wird ein Bedienfeld bereitgestellt, innerhalb welchem die Eingabe des Benutzers erfasst wird.

Eine Bedienvorrichtung der genannten Art ist beispielsweise aus der US 2009/0222770 A1 bekannt. Bei der aus dem Stand der Technik bekannten Bedienvorrichtung kann ein Benutzer auf einem Touchscreen, also einem Bildschirm mit berührungssensitiver Oberfläche, handschriftlich beispielsweise mit dem Finger einzelne Buchstaben schreiben. Die hierbei vom Finger auf dem Touchscreen gezogene Zeichenspur wird einer Handschrifterkennung zugeführt, welche den geschriebenen Buchstaben erkennt. In Abhängigkeit von dem erkannten Buchstaben wird dann eine Funktion in dem portablen Kommunikationsgerät aktiviert. Nachteilig bei der bekannten Bedienvorrichtung ist, dass der Benutzer stets zunächst ein Handschrifterkennungsmodul aktivieren muss, um ein handschriftliches Zeichen eingeben zu können. Grund für den Aktivierungszwang ist, dass ansonsten andere Bedienvorgänge an dem Touchscreen als eine Zeicheneingabe missverstanden werden könnten.

Die mehrfache Nutzung eines Touchscreens sowohl für Bedieneingaben, wie beispielsweise einerseits das Drücken von Icons oder Buttons sowie andererseits die Handschrifterkennung ist oftmals dadurch erzwungen, dass für eine Handschrifterkennung auf einem kleinen Touchscreen, beispielsweise einem Bildschirm eines Smartphones, eine möglichst große Interaktionsfläche benötigt wird. Zusätzlich werden jedoch weitere Funktionen benötigt, wie beispielsweise das Auswählen von Listenelementen auf Basis der Handschrifteingabe, der Rücksprung in ein anderes Menü (sogenannte Back-Funktionen oder Escape-Funktionen), das Auswählen einer alternativen Eingabemethode, wie Sprache oder der Bildschirm-Tastatur, oder das Löschen von vorher eingegebenen Zeichen. Alle diese Funktionen benötigen ebenfalls Interaktionsflächen oder Bedienflächen, wie z.B. Buttons. Somit gibt es einen Widerspruch bei der Auslegung einer Bedienvorrichtung zwischen möglichst großen Interaktionsflächen für die Handschrifterkennung und der Bereitstellung weiterer Interaktionsflächen zum Aktivieren der weiteren Funktionen.

Aus dem Dokument DE 10 2011 017 261 A1 ist eine Bedienvorrichtung zum Bereitstellen einer Nutzerschnittstelle in einem Kraftfahrzeug bekannt. Auf einem Touchscreen kann eine Liste mit auswählbaren Listenelementen angezeigt werden, über welche der Benutzer mit einem Finger hinweg auch Buchstaben zeichnen kann, um eine Suchfunktion in der Liste zu bedienen. Dieses Zeichnen eines Buchstabens ist als Handschriftgeste G1 bezeichnet. Um ein Listenelement auswählen zu können, muss der Benutzer eine Geste G2 ausführen. Dies wird als Manipulationsmodus bezeichnet. Um einen unbeabsichtigten Wechsel zwischen den beiden Modi zu vermeiden, gibt es eine Eingabezone für eine Buchstaben-Geste G1 und eine Eingabezone für eine Objektmanipulations-Geste G2, wobei diese beiden Eingabezonen nicht-überschneidend sind.

Aus der JP 2012-068706 A ist ein Navigationssystem mit Touchscreen bekannt, das zum Eingeben von Buchstaben ein Eingabefeld aufweist. Das Eingabefeld wird automatisch vergrößert, falls der Benutzer über den Rand des Eingabefeldes hinaus zu schreiben droht.

Aus dem Dokument EP 1 205 836 A2 ist bekannt, an einem Touchscreen eine Berührung eines Eingabeobjekts, d.h. eines sogenannten Stylus, zu erkennen und anhand eines Verlaufs des Berührvorgangs zu entscheiden, ob der Benutzer einen Strich zeichnen, etwas antippen oder ein graphisches Objekt verschieben wollte. Wird dabei das Eingabeobjekt nach der Berührung um eine Mindestdistanz verschoben, so wird vom Zeichnen eines Striches ausgegangen. Verharrt das Eingabeobjekt dagegen still und wird aber innerhalb einer vorbestimmten Zeitdauer entfernt, so wird von einem Antippen ausgegangen.

Der Erfindung liegt die Aufgabe zugrunde, eine Bedienvorrichtung für eine Kraftfahrzeugkomponente räumlich kompakt auszugestalten.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Durch die Erfindung ist eine Bedienvorrichtung für eine Kraftfahrzeugkomponente eines Kraftfahrzeugs bereitgestellt. Beispielsweise kann mit der Bedienvorrichtung als Kraftfahrzeugkomponente ein Navigationsgerät und/oder ein Infotainmentsystem bedient werden. Die Bedienvorrichtung weist eine Anzeigeeinrichtung, wie beispielsweise einen Bildschirm, sowie eine berührungssensitive Eingabefläche auf. Beispielsweise können die Anzeigeeinrichtungen und die Eingabefläche gemeinsam durch einen Touchscreen bereitgestellt sein. Die Eingabefläche kann aber auch als Touchpad räumlich getrennt von der Anzeigeeinrichtung realisiert sein. Die erfindungsgemäße Bedienvorrichtung weist zudem eine Steuervorrichtung auf, also beispielsweise eine Steuerschaltung oder einen Prozessor mit einem Steuerprogramm, die das im Folgenden beschriebene erfindungsgemäße Verfahren durchzuführen ausgelegt ist.

Mit dem erfindungsgemäßen Verfahren wird für die zu bedienende Kraftfahrzeugkomponente ein Eingabetext durch den Benutzer festgelegt. Der Eingabetext kann beispielsweise im Falle eines Navigationsgeräts der Name eines Navigationszieles, also einer Ortschaft oder eines sogenannten Point-of-Interest sein. Der Eingabetext braucht dabei nicht vollständig frei eingegeben werden, sondern es gibt eine Auswahl aus mehreren möglichen Eingabetexten, also beispielsweise aus einer Datenbank. Bei dem Verfahren wird durch die Steuereinrichtung auf der Anzeigevorrichtung zumindest ein Auswahlvorschlag aus den mehreren möglichen Eingabetexten angezeigt, also z.B. der Auswahlvorschlag "Home" (Heim) für eine Heimfahrt.

Zudem wird durch die Steuereinrichtung auf der berührungssensitiven Eingabefläche ein Bedienfeld oder Eingabefeld abgegrenzt, innerhalb welchem eine Eingabe eines Benutzers erfasst wird. Weist die Bedienvorrichtung einen Touchscreen auf, so kann das Bedienfeld beispielsweise graphisch von ihrer Umgebung auf der Anzeigeeinrichtung durch Linien abgegrenzt sein. Das Bedienfeld kann die gesamte Eingabefläche einnehmen oder die Eingabefläche beispielsweise mit Buttons und/oder Icons teilen.

Das erfindungsgemäße Verfahren sieht nun vor, dass über das Bedienfeld mehrere unterschiedliche Bedienfunktionen der Bedienvorrichtung gesteuert werden. Welche der Bedienfunktionen aktiviert wird, ist davon abhängig, welche Bedienhandlung der Benutzer mit einem Eingabeelement, beispielsweise seinem Finger oder einem Stab, innerhalb des Bedienfelds ausführt. Hierzu erkennt die Steuereinrichtung eine Berührung der Bedienfläche innerhalb des Bedienfeldes, also mit anderen Worten beispielsweise den Beginn einer Berührung durch einen Finger, und überprüft dann nach einer vorbestimmten Zeitdauer, ob die Berührung nur ein Antippen war und die erfasste Berührung schon wieder beendet ist. Die Zeitdauer kann beispielweise in einem Bereich von 200 Millisekunden bis 1000 Millisekunden liegen. Gegebenenfalls, wenn also die Berührung schon wieder nach dieser Zeitdauer beendet ist, wird dies als eine Bestätigung eines angezeigten Auswahlvorschlages angesehen. Mit anderen Worten wird also ein von dem Benutzer ausgewählter Auswahlvorschlag als Eingabe an die Kraftfahrzeugkomponente ausgegeben. Handelt es sich um lediglich einen einzigen angezeigten Auswahlvorschlag, so wird natürlich dieser verwendet. Werden dagegen mehrere Auswahlvorschläge beispielsweise in Form einer Liste angezeigt, so wird derjenige Auswahlvorschlag verwendet, auf welchen der Benutzer getippt hat.

Dauert die Berührung dagegen länger als die Zeitdauer an, so hat der Benutzer offenbar die Eingabefläche nicht nur angetippt, sondern er hält das Eingabeelement länger als die vorbestimmte Zeitdauer auf der Eingabefläche. Für diesen Fall wird gemäß dem Verfahren eine von dem Benutzer innerhalb des Bedienfelds gezeichnete Zeichenspur erfasst.

Dieses erfindungsgemäße Verfahren und damit auch die erfindungsgemäße Bedienvorrichtung weisen den Vorteil auf, dass die beschriebene Eingabefläche verhältnismäßig groß gewählt werden kann, das heißt ihr Flächenanteil auf der Eingabefläche größer als in dem Fall ist, dass für die unterschiedlichen Bedienfunktionen, die nun sämtlich mittels des einzigen Bedienfeldes aktiviert werden können, einzelne voneinander getrennte Bedienfelder bereitgestellt werden müssten, die dann entsprechend kleinere Flächen aufweisen müssen. Aufgrund der Größe kann der Benutzer beispielsweise während einer Fahrt mit dem Kraftfahrzeug sehr viel zielsicherer und mit geringerer Aufmerksamkeit das Bedienfeld mit dem Finger treffen.

Die Auswertung der Zeichenspur kann wieder in mehreren unterschiedlichen Weisen erfolgen, so dass hierdurch wieder mehrere unterschiedliche Bedienfunktionen gesteuert werden können.

Für den Fall, dass die Steuereinrichtung auf der Anzeigeeinrichtung mehrere Auswahlvorschläge als eine Auswahlliste anzeigt, sieht eine Weiterbildung des Verfahrens vor, dass beim Erfassen der Zeichenspur überprüft wird, ob die bisher erfasste Zeichenspur ein vorbestimmtes Gestenkriterium erfüllt. Ist das Gestenkriterium erfüllt, so wird in Abhängigkeit von der Zeichenspur eine Scrollfunktion der Auswahlliste gesteuert, das heißt die auf der Anzeigeeinrichtung angezeigten Listenelemente der Auswahlliste werden gemäß einer auf der Bedienfläche vom Benutzer ausgeführten Wischbewegung verschoben oder umplatziert und neue Listenelemente auf der Anzeigeeinrichtung dargestellt. Hierdurch ergibt sich der Vorteil, dass bei der Bedienvorrichtung auf der Anzeigeeinrichtung nicht der sonst typische "Scroll-Balken" beispielsweise am Rand des Eingabefelds sehr schmal neben der Auswahlliste bereitgestellt werden muss, wo er mit dem Finger aufgrund seiner geringen Breite nur schwer zu treffen ist.

Bevorzugt wird die Auswahlliste innerhalb des Bedienfelds selbst angezeigt, so dass der Benutzer den Finger direkt auf die Auswahlliste legen kann und dann die Auswahlliste durch Wischen mit dem Finger nach oben oder nach unten oder nach rechts oder nach links die Auswahlliste verschieben kann. Das Gestenkriterium kann beispielsweise darin bestehen, dass die Wischbewegung nur linear nach oben oder nach unten verlaufen darf und beispielsweise keine Ecken oder Bögen mit einer Krümmung, die größer als eine vorbestimmte Maximalkrümmung ist, aufweisen darf.

Eine andere Weiterbildung sieht vor, dass die Steuereinrichtung die Zeichenspur einer Handschrifterkennung zum Erkennen einer Zeicheneingabe zuführt. Mit anderen Worten kann der Benutzer in dem Bedienfeld ein Zeichen, wie beispielsweise einen Buchstaben oder eine Zahl, handschriftlich eingeben. In Abhängigkeit von der erkannten Zeicheneingabe wird dann aus den Eingabetexten zumindest ein neuer Auswahlvorschlag ausgewählt und auf der Anzeigeeinrichtung angezeigt. Mit anderen Worten kann der Benutzer für den Fall, dass der ursprüngliche Auswahlvorschlag nicht seinem Wunsch entspricht, anstelle des Antippens des Bedienfeldes auf dem Bedienfeld einfach beispielsweise ein oder mehrere Zeichen, beispielsweise ein oder mehrere Anfangsbuchstaben, schreiben und bekommt dann zumindest einen neuen Auswahlvorschlag angezeigt, nämlich insbesondere all diejenigen möglichen Eingabetexte, die beispielsweise mit diesen Zeichen beginnen oder ein anderes Übereinstimmungskriterium betreffend der erkannten Zeicheneingabe erfüllen. Die im Zusammenhang mit der Erfindung zu verwendende Handschrifterkennung kann dabei in an sich aus dem Stand der Technik bekannter Weise ausgestaltet sein.

Erfindungsgemäß wird das Bedienfeld vergrößert, nachdem die Berührung erkannt wurde, also beispielsweise der Beginn der Berührung. Zusätzlich oder alternativ dazu kann eine Vergrößerung mit dem Erfassen der Zeichenspur, also bei oder vor dem Erfassen der Zeichenspur, vorgesehen sein. Mit anderen Worten wird also die Fläche vergrößert, auf welcher die Zeichenspur vom Benutzer eingegeben werden kann und auch durch die Steuereinrichtung als Teil der Zeichenspur erkannt oder akzeptiert wird. Hierdurch ergibt sich der Vorteil, dass während des Zeichnens der Zeichenspur eine größere Fläche, insbesondere die gesamte berührungssensitive Eingabefläche, genutzt werden kann. Hierbei können dann beispielsweise an das Bedienfeld angrenzende und auch weitere andere Bedienfelder, beispielsweise Buttons oder Icons, von dem vergrößerten Bedienfeld überdeckt oder verdrängt oder als inaktiv gekennzeichnet und vorzugsweise ausgegraut werden, das heißt, diese anderen Bedienfelder sind dann nicht aktiv, während die Zeichenspur erfasst wird. Mit anderen Worten wird zumindest ein weiteres Bedienfeld zum Aktivieren einer jeweiligen Zusatzfunktion, also einer von den beschriebenen Bedienfunktionen verschiedenen Funktion, zunächst angezeigt und beim Vergrößern des einen Bedienfeldes für die Erfassung der Zeichenspur dann verkleinert oder entfernt oder deaktiviert, um für das vergrößerte Bedienfeld Platz zu schaffen.

Insgesamt wird bevorzugt der folgende Ablauf der Bedienvorgänge mittels der Bedienvorrichtung durch das erfindungsgemäße Verfahren realisiert. Die Steuereinrichtung zeigt zunächst nur einen einzelnen Auswahlvorschlag an, welcher bei Antippen der Bedienfläche einen Standardtext oder einen Befehl zum Überspringen der Auswahl als Eingabe festlegt. Soll beispielsweise für ein Navigationsgerät eine Zieleingabe erfolgen, so kann anstelle eines Straßennamens beispielsweise als der erste einzelne Auswahlvorschlag ausschließlich der Standardtext "Zentrum" oder die Überspringmöglichkeit "Straßeneingabe überspringen" angezeigt werden. Falls der Benutzer den einzelnen Auswahlvorschlag durch Antippen des Bedienfelds wählt, kann in dem Eingabeverfahren weitergemacht werden.

Falls der Benutzer aber anstelle des Antippens nun eine Zeichenspur innerhalb der Bedienfläche zeichnet, wird mittels der Handschrifterkennung ein Anfangs-Wortbestandteil ermittelt, also beispielsweise ein Anfangszeichen oder auch mehrere Anfangszeichen, und es werden dann aus den möglichen Eingabetexten, also in dem Beispiel aus Straßennamen, wie sie beispielsweise in einer Navigationsdatenbank gespeichert sein können, neue Auswahlvorschläge ermittelt. Jeder dieser neuen Auswahlvorschläge beginnt dann entsprechend mit dem Anfangs-Wortbestandteil. Die neuen Auswahlvorschläge werden dann auf der Anzeigeeinrichtung angezeigt. Gibt der Benutzer beispielsweise den Buchstaben "B" ein, so werden also in dem Beispiel Straßennamen angezeigt, die alle mit dem Anfangsbuchstaben "B" beginnen.

Dann überprüft die Steuereinrichtung, ob der Benutzer entweder durch Antippen der Bedienfläche einen der neuen Auswahlvorschläge auswählt, also beispielsweise einen Straßennamen, oder durch eine Zeichenspur einen weiteren Wortbestandteil zum Einschränken der Menge der neuen Auswahlvorschläge festlegt. Beispielsweise kann der Benutzer also den zweiten Buchstaben "r" handschriftlich auf dem Bedienfeld schreiben. Die Steuereinrichtung zeigt dann im letzteren Fall danach nur noch solche Auswahlvorschläge an, die sowohl den Anfangs-Wortbestandteil als auch den weiteren Wortbestandteil aufweisen, also in dem Beispiel Straßennamen, die mit "Br" beginnen.

Mit anderen Worten kann der Benutzer insgesamt in ein und demselben Bedienfeld entweder eine Auswahl aus den angezeigten Auswahlvorschlägen treffen oder systematisch durch Handschrifteingaben die angezeigten Auswahlvorschläge konkretisieren. Hierdurch ergibt sich der Vorteil, dass stets ein verhältnismäßig großes Bedienfeld auf der Eingabefläche, also beispielsweise einem Touchscreen, definiert sein kann, weil sowohl das Quittieren einer Auswahl durch Antippen als auch das Zeichnen eines neuen handschriftlichen Zeichens auf ein und demselben Bedienfeld möglich ist. Zusätzlich kann die Scroll-Funktion bereitgestellt sein.

Die Handschrifteingabe wird erfindungsgemäß durch einen Time-Out nach einem letzten Abheben des Fingers des Benutzers beendet, so dass auch Buchstaben mit mehreren Zeichenlinien und einem Abheben des Fingers zwischen den Zeichenlinien geschrieben werden können.

Wie bereits ausgeführt, kann die Bedienvorrichtung gemäß einer Ausführungsform der Erfindung für die Eingabe eines Navigationsziels an einem Navigationsgerät ausgelegt sein. Zusätzlich oder alternativ dazu kann vorgesehen sein, dass die Eingabe als Suchadresse an eine Adressdatenbank ausgegeben wird, also als eine Fahrzeugkomponente beispielsweise ein Telefoniesystem bedient wird. Zusätzlich oder alternativ dazu kann die Suchadresse auch einer Telefondatenbank übergeben werden, die dann eine Adresssuche in einem elektronischen Adressbuch durchführt.

Zu der Erfindung gehört nicht nur die beschriebene Bedienvorrichtung, sondern auch ein Kraftfahrzeug mit einer Ausführungsform der erfindungsgemäßen Bedienvorrichtung. Das erfindungsgemäße Kraftfahrzeug ist bevorzugt als Kraftwagen, insbesondere als Personenkraftwagen, ausgestaltet. Die Bedienvorrichtung kann hierbei beispielsweise Bestandteil des Infotainmentsystems sein.

Die Bedienvorrichtung kann aber auch durch ein portables Kommunikationsgerät bereitgestellt sein, also beispielsweise ein Smartphone oder ein Tablet-PC oder ein Notebook oder Notepad oder einen PDA (Personal Digital Assistant). Um hierbei ein herkömmliches portables Kommunikationsgerät dahingehend zu ertüchtigen, dass es eine Ausführungsform des erfindungsgemäßen Verfahrens durchführt, ist durch die Erfindung auch ein Datenträger mit einem darin gespeicherten Programmcode bereitgestellt, der dazu ausgelegt ist, bei Ausführen durch eine Prozessoreinrichtung eines portablen Kommunikationsgeräts eine Ausführungsform des erfindungsgemäßen Verfahrens durchzuführen. Hierbei kann dann beispielsweise ebenfalls ein Touchscreen zum Bereitstellen sowohl der Anzeigeeinrichtung als auch der Eingabefläche vorgesehen sein. Der von dem Benutzer mittels der Bedieneinrichtung festgelegte Eingabetext, welcher als Eingabe an die Kraftfahrzeugkomponente ausgegeben wird, kann hierzu beispielsweise über eine drahtlose oder eine drahtgebundene Kommunikationsverbindung an das Kraftfahrzeug übertragen werden, also beispielsweise über eine Bluetooth-Verbindung oder eine USB-Verbindung (USB - Universal Serial Bus). Auch eine W-LAN-Verbindung (W-LAN - Wireless Local Areal Network) ist möglich.

Im Folgenden ist ein Ausführungsbeispiel der Erfindung beschrieben. Hierzu zeigt:
- Fig. 1: eine schematische Darstellung einer Ausführungsform des erfindungsgemäßen Kraftwagens mit einer Ausführungsform der erfindungsgemäßen Bedienvorrichtung,
- Fig. 2: eine schematische Darstellung einer Anzeige auf einer Anzeigevorrichtung der Bedienvorrichtung von Fig. 1 während einer Handschrifteingabe,
- Fig. 3: eine schematische Darstellung einer Anzeige der Bedienvorrichtung mit einer Auswahlliste,
- Fig. 4: eine schematische Darstellung einer Anzeige der Anzeigeeinrichtung während des Einschränkens der Auswahlliste von Fig. 3,
- Fig. 5: eine schematische Darstellung einer Bildschirmtastatur der Bedienvorrichtung von Fig. 1 und
- Fig. 6: eine Veranschaulichung eines Ablaufs einer Ausführungsform des erfindungsgemäßen Verfahrens.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

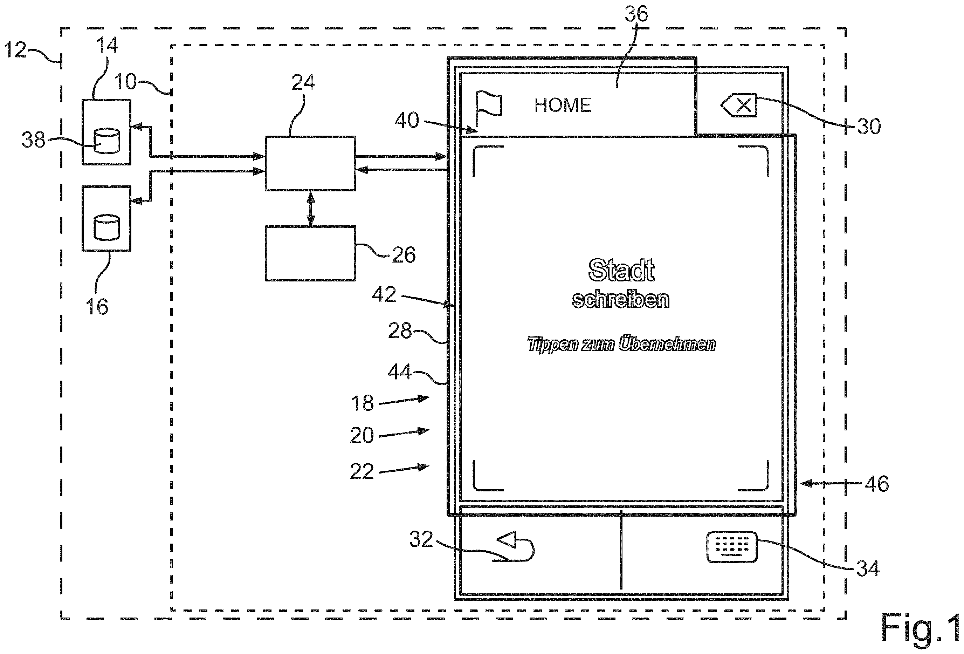

In Fig. 1 ist eine Bedienvorrichtung 10 gezeigt, die beispielsweise in einem Kraftfahrzeug 12 bereitgestellt sein kann. Das Kraftfahrzeug 12 kann beispielsweise ein Kraftwagen, insbesondere ein Personenkraftwagen, sein. Mit der Bedienvorrichtung 10 können eine oder mehrere Kraftfahrzeugkomponenten 14, 16 des Kraftfahrzeugs bedient werden. Beispielsweise kann die Kraftfahrzeugkomponente 14 ein Navigationsgerät oder ein Navigationsmodul eines Infotainmentsystems sein. Die Kraftfahrzeugkomponente 16 kann beispielsweise ein Telefoniesystem oder ein Medienabspielsystem, beispielsweise ein CD-Abspielgerät oder ein MP3-Abspielgerät oder ein Videoabspielgerät umfassen.

Mittels der Bedienvorrichtung 10 kann ein (nicht dargestellter) Benutzer eine Texteingabe bestehend aus einem oder mehreren Zeichen, beispielsweise Buchstaben und/oder Zahlen und/oder Sonderzeichen, wie Kommas oder Bindestrichen, festlegen, die dann als Eingabe an eine der Kraftfahrzeugkomponenten 14, 16 ausgegeben wird.

Die Bedienvorrichtung 10 kann eine Anzeigeeinrichtung 18 aufweisen, die beispielsweise ein Bildschirm sein kann, der beispielsweise in einer Mittelkonsole des Kraftfahrzeugs 12 eingebaut sein kann. Die Bedienvorrichtung 10 kann auch eine berührungssensitive Eingabefläche 20 aufweisen, wobei in dem Ausführungsbeispiel davon ausgegangen ist, dass die Anzeigeeinrichtung 18 Bestandteil eines Touchscreens ist, der auch eine berührungssensitive Oberfläche als Eingabefläche 20 aufweist, durch welche eine Anzeige 22 der Anzeigeeinrichtung 18 hindurch scheint. Die Anzeige 22 kann durch eine Steuereinrichtung 24 gesteuert sein. Die Steuereinrichtung 24 kann beispielsweise einen Mikrocontroller aufweisen oder ein Programmmodul einer Prozessoreinrichtung, wie beispielsweise einer Prozessoreinrichtung eines Infotainmentsystems oder einer zentralen Rechnereinrichtung des Kraftfahrzeugs 12. Die Bedienvorrichtung 10 kann des Weiteren eine Handschrifterkennung 26 aufweisen, die in an sich bekannter Weise ausgestaltet sein kann und dazu ausgelegt sein kann, anhand einer Zeichenspur, welche die Steuereinrichtung 24 an der Eingabefläche 20 erfasst, eine Texteingabe, die durch die Zeichenspur repräsentiert ist, in entsprechende Texte, beispielsweise im ASCII-Code (ASCII - American Standard Code for Information Interchange), umzuwandeln.

Die Komponenten der Bedienvorrichtung 10 können auch beispielsweise durch ein Navigationsgerät, ein Smartphone, ein Tablet-PC, ein Notebook oder auch ein anderes portables Kommunikationsgerät mit Anzeigeeinrichtung und berührungssensitiven Eingabeflächen, das der Benutzer temporär in dem Kraftfahrzeug 12 betreibt, bereitgestellt sein.

Um die Texteingabe oder einfach Eingabe für die Fahrzeugkomponente 14, 16 festzulegen, sind durch die Steuereinrichtung 24 als Anzeige 22 beispielsweise ein Bedienfeld 28, und optional ein Tastfeld oder Löschbutton 30 zum Löschen einer getätigten Eingabe, ein Tastfeld oder Beenden-Button 32 zum Beenden oder Abbrechen der Eingabe und ein Tastfeld oder Tastatur-Button 34 zum Wechseln von einer Handschrifteingabe zu einer Bildschirmtastatur, bereitgestellt. Es können auch weitere Tastfelder oder auch weniger als die beschriebenen Tastfelder und weitere Anzeigefelder oder Bedienfelder bereitgestellt sein.

Die Anzeigeeinrichtung 18 kann bei der Bedienvorrichtung 10 verhältnismäßig klein sein, das heißt eine verhältnismäßig geringe Fläche aufweisen. Dennoch ist es für den Benutzer nicht umständlich, die Bedienvorrichtung 10 zu bedienen. Dies wird durch den im Folgenden beschriebenen Betrieb der Bedienvorrichtung 10 erreicht. Hierzu sei im folgenden beispielhaft angenommen, dass die Fahrzeugkomponente 14 ein Navigationsgerät des Kraftfahrzeugs 12 ist.

Durch das Bedienfeld 28 kann der Benutzer nicht nur eine einzelne Bedienfunktion, also z.B. das Festlegen eine Texteingabe durch Handschrifteingabe, sondern mehrere unterschiedliche Bedienfunktionen aktivieren. Hierzu kann in oder außerhalb des Bedienfeldes 28 ein Auswahlvorschlag 36 auf der Anzeigeeinrichtung 18 durch die Steuereinrichtung 24 angezeigt werden. In dem in Fig. 1 veranschaulichten Beispiel möchte der Benutzer mittels der Bedienvorrichtung 10 aus einer Navigationsdatenbank 38 der Fahrzeugkomponente 14 einen Städtenamen auswählen. In der Navigationsdatenbank 38 sind hierbei die möglichen Städtenamen oder allgemein die möglichen Eingabetexte gespeichert. Der Auswahlvorschlag 36 ist in dem Beispiel der Wohnort des Benutzers ("HOME").

Das Bedienfeld 28 kann hierbei eine Anzeigefläche 40 für den Auswahlvorschlag 36 als auch eine Schreibfläche 42 für eine Handschrifteingabe für den Handschrifterkenners 26 aufweisen. Die Schreibfläche 42 kann durch einen Hinweis "Stadt schreiben" (Englisch: write town) kenntlich gemacht sein. Das der Handschrifterkenner 26 aktiv ist, kann auch durch ein entsprechendes Handschriftsymbol 46 ebenfalls angezeigt werden.

Der Benutzer kann nun durch Antippen des Bedienfelds 28 den Auswahlvorschlag 36 akzeptieren. Zur Information des Benutzers kann entsprechend "Tippen zum Übernehmen" (Englisch: "Tap to accept") angezeigt sein. Hierzu kann er sowohl eine Anzeigefläche 40 als auch die Schreibfläche 42 nutzen. Das Bedienfeld 38 weist eine entsprechende Feldgrenze 44 auf, die die Anzeigefläche 40 und die Einschreibfläche 42 umfasst.

Die Steuereinrichtung 24 akzeptiert das Antippen innerhalb der Feldgrenze 44. Der Benutzer kann aber auch handschriftlich irgendwo in dem Bedienfeld 28 damit beginnen, eine Stadt zu schreiben. Der Benutzer kann hierbei insbesondere auch in dem gezeigten Beispiel auf dem Anzeigefeld 40 mit dem Schreiben beginnen, das hier Bestandteil des Bedienfeldes 28 ist. Die Steuereinheit 24 unterscheidet also zwischen einem Antippen des Bedienfeldes 28 und einem Schreiben überall auf dem Bedienfeld 28.

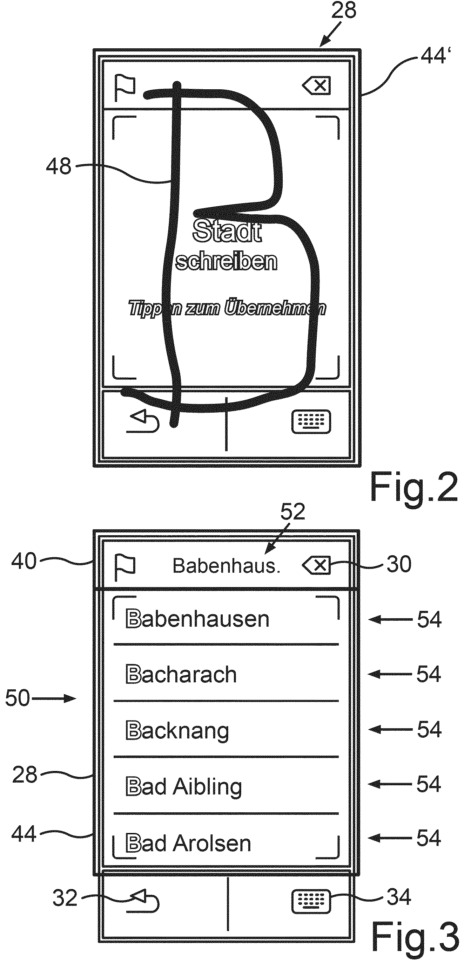

Der Benutzer möchte nun nicht nach Hause fahren (HOME) sondern in eine andere Stadt. In Fig. 2 ist gezeigt, dass der Benutzer nun einfach mit einem Eingabeelement, beispielsweise mit dem Finger oder einem Stab, zunächst innerhalb des Bedienfeldes 28 mit dem Schreiben beginnt und hierbei beispielshaft den Großbuchstaben "B" schreibt. Die Steuereinheit 24 erkennt den Beginn der Berührung der Anzeigeeinrichtung 18 innerhalb des Bedienfeldes 28 und misst die Zeit ab dem initialen Berührzeitpunkt. Sobald eine vorbestimmte Zeitdauer verstrichen ist, beispielsweise eine Zeitdauer in einem Bereich von 200 Millisekunden bis 1000 Millisekunden, überprüft sie, ob die Berührung beendet ist. Dies entspricht dann einem Antippen des Bedienfeldes 28. Die Steuereinrichtung 24 würde dann den Auswahlvorschlag 36, hier also die Heimatadresse, an die Navigationseinrichtung 14 übergeben. Dann könnte die Navigationseinrichtung 14 das entsprechende Reiseziel festlegen und mit der Navigationsassistenz starten.

Der Benutzer schreibt aber nun mit der Hand den Buchstaben, was länger als die Zeitdauer andauert, das heißt die Berührung ist nach der gemessenen Zeitdauer noch nicht beendet. Dies wird durch die Steuereinrichtung 24 erkannt. Die Steuereinrichtung 24 verfolgt nun die Zeichenspur 48, die der Benutzer in dem Bedienfeld 28 zeichnet, d.h. sie speichert z.B. Koordinaten von Punkten der Zeichenspur 48. Damit der Benutzer mehr Platz zum Schreiben hat, wird durch die Steuereinrichtung 24 die Feldgrenze 44 des Bedienfelds 28 auf eine Feldgrenze 44' vergrößert, so dass dem Benutzer beispielsweise die gesamte Eingabefläche 20 zum Schreiben zur Verfügung steht, das heißt die Zeichenspur auch außerhalb der vormaligen Feldgrenzen 44 als gültig erfasst wird. Die übrigen Bedienfelder 30, 32, 34 sind hier beispielsweise durch das Bedienfeld 28 überdeckt, das heißt inaktiv. Dies kann dem Benutzer beispielsweise durch Ausgrauen der Anzeige veranschaulicht werden.

Die aktive Fläche zur Handschrifteingabe wird also beispielsweise bei einem Touchscreen auf die maximale Anzeigefläche vergrößert, bis die Handschrifteingabe beendet ist. Die Beendung der Handschrifteingabe kann beispielsweise durch einen Time-Out nach dem letzten Abheben des Fingers durchgeführt werden, wodurch auch das Schreiben von Buchstaben mit mehreren Zeichenlinien und zwischendurch Abheben des Fingers möglich ist. Das Erkennen des Antippens kann auch ein Zusatzkriterium umfassen, dass z.B. während des Berührens innerhalb der Zeitdauer alle Berührpunkte innerhalb einer vorbestimmten Berührfläche liegen müssen, also der Benutzer nicht mit dem Finger über die Bedieneingabefläche gewischt haben darf.

Die Zeichenspur 48 wird durch die Steuereinrichtung 24 an die Handschrifterkennung 26 übergeben, die dann in dem Beispiel den Buchstaben "B" erkennt. Nun ermittelt die Steuereinrichtung 24 auf der Grundlage dieser Texteingabe beispielsweise in der Datenbank 28 all diejenigen Datenbankeinträge, deren Anfangs-Wortbestandteil der Texteingabe entspricht, also hier dem Buchstaben "B". Hierdurch ergibt sich eine Liste mit neuen Auswahlvorschlägen, die, wie in Fig. 3 veranschaulicht, dem Benutzer als Auswahlliste 50 angezeigt werden kann. Die Auswahlliste 50 kann beispielsweise innerhalb des Bedienfelds 28 angezeigt werden. Es kann ein zusätzlicher Auswahlvorschlag 52 in dem Anzeigefeld 40 angezeigt werden. Zur Auswahl eines Elements der Auswahlliste 50 kann wieder durch Antippen auf einen Listeneintrag 54 ermöglicht sein. Der Benutzer kann auch einfach seinen Finger auf das Bedienfeld 28 legen und dann mit dem Finger nach oben oder nach unten streichen, wodurch dann keine Zeicheneingabe erfolgt, sondern die Auswahlliste 50 entsprechend nach oben oder nach unten gescrollt wird.

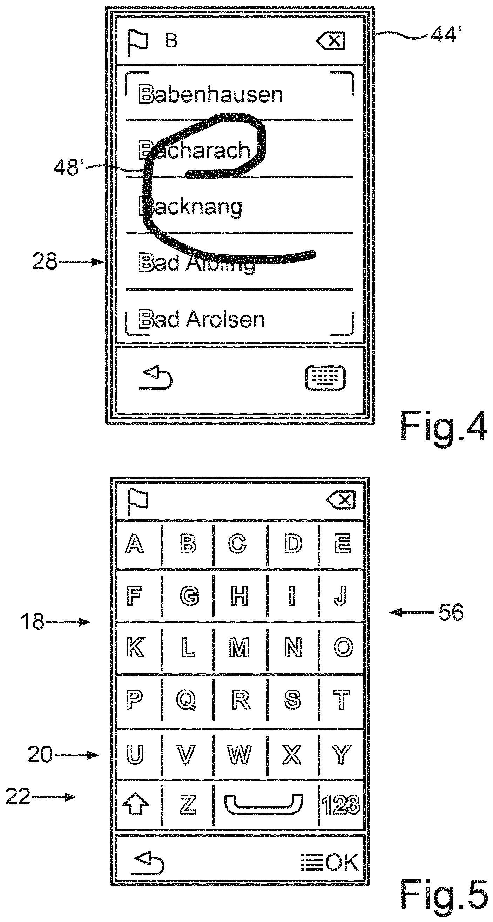

Dem Benutzer ist es aber auch möglich, die Ergebnisse weiter einzugrenzen, das heißt die Auswahlliste 50 zu konkretisieren, indem Listeneinträge 54 entfernt werden. Wie in Fig. 4 gezeigt, kann der Benutzer hierzu einfach wieder auf dem Bedienfeld 28 anstelle dieses anzutippen nun wieder eine Zeichenspur 48' zeichnen. Hierbei wird dann wieder das Bedienfeld 28 auf die Bedienfeldgrenzen 44' erweitert. In dem in Fig. 4 gezeigten Beispiel hat der Benutzer den Buchstaben "e" beschrieben. Die Steuereinrichtung 24 übergibt die Zeichenspur 48' an die Handschrifterkennung 26, die den Buchstaben "e" erkennt. Die Steuereinrichtung 24 sucht nun beispielsweise in der Navigationsdatenbank 38 all diejenigen Datenbankeinträge, die mit der Buchstabenfolge "Be" beginnen und konkretisiert somit die Auswahlliste 50. Es kann nun wieder eine weitere, eingeengte Auswahlliste angezeigt werden.

In Fig. 5 ist gezeigt, wie alternativ zu einer Handschrifteingabe durch Betätigen des Tastatur-Buttons 34 der Benutzer eine Bildschirmtastatur 56 aktivieren kann. Hierbei kann dann das Bedienfeld 28 deaktiviert sein, das heißt z.B. nicht mehr angezeigt werden, weil nun klar ist, dass der Benutzer ausschließlich einzelne Buchstaben mittels der Bildschirmtastatur 56 eingeben möchte.

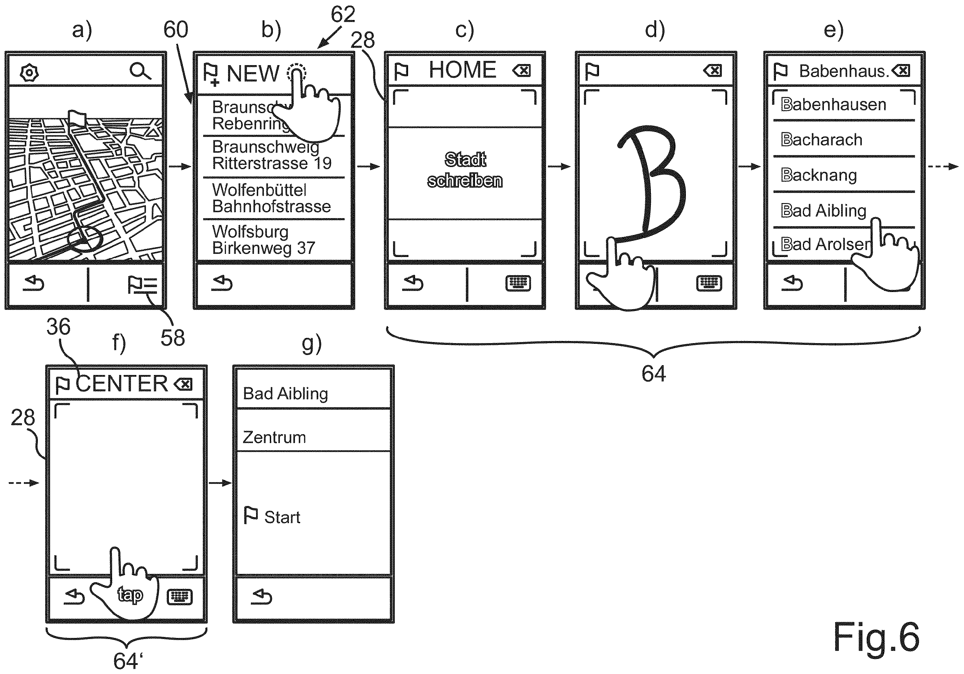

In Fig. 6 ist noch einmal eine Abfolge von Anzeigen dargestellt, wie sie auf der Anzeigeeinrichtung 18 durch die Steuereinrichtung 24 nacheinander erzeugt werden können, damit der Benutzer ein Navigationsziel festlegen kann. Eine Anzeige a zeigt, dass die Bedienvorrichtung 10 auf die Kraftfahrzeugkomponente 14 umgestellt ist, die für die Navigation zuständig sein kann. Der Benutzer kann nun ein Bedienfeld 58 betätigen, durch welche die beschriebene Eingabefunktion der Bedienvorrichtung 10 aktiviert wird. Dem Benutzer wird eine erste Auswahlliste 16 mit möglichen Navigationszielen angezeigt. Des Weiteren ist ein Aktivierungsfeld 62 ("NEW" - neu) zum Aktivieren des Bedienfelds 28 bereitgestellt. Wählt der Benutzer dieses Aktivierungsfeld 62, so wird in einer Anzeige c das Bedienfeld 28 aktiviert, wie es bereits im Zusammenhang mit Fig. 1 beschrieben worden ist. Der Benutzer schreibt nun den Anfangsbuchstaben, hier "B", der Zielstadt, wodurch die Anzeige d erzeugt wird, wie sie bereits im Zusammenhang mit Fig. 2 beschrieben worden ist. Die Anzeige e entspricht der im Zusammenhang mit Fig. 3 beschriebenen Funktionalität der Bedienvorrichtung 10. Insgesamt ergibt sich ein Auswahlzyklus 64 gemäß den Anzeigen c, d, e, der für eine weitere Auswahl wiederholt werden kann, z.B. um den Straßennamen festzulegen. Es ergibt sich ein weiterer Auswahlzyklus 64'. Die Anzeige f zeigt hierzu wieder das Bedienfeld 28, wobei nun als Auswahlvorschlag 36 das Stadtzentrum ("Center") angegeben ist. Der Benutzer tippt ("tap") nun das Bedienfeld 28 an, wodurch durch die Steuereinrichtung 24 also das Stadtzentrum 36 als Stadtname angegeben wird. Hierdurch ergibt sich ein sehr kurzer Auswahlzyklus 64', der nämlich durch Bestätigen des Auswahlvorschlags 36 sofort beendet worden ist. In einer Anzeige g zeigt die Steuereinrichtung 24 noch einmal zusammenfassend an, wie das Navigationsziel festgelegt wurde. Der Benutzer kann nun durch Drücken eines Start-Felds die Steuereinrichtung 24 dazu veranlassen, den Eingabetext für die Zielstadt und die Straße, hier das Stadtzentrum, an die Kraftfahrzeugkomponente 14 zu übertragen, die dann mit der Navigationsassistenz beginnen kann.

Das gezeigte Beispiel ist für einen Navigationsassistenten. Genauso kann aber auch in einer Mediendatenbank oder einer Adressdatenbank oder einer Telefonnummernsammlung mittels des Bedienfelds 28 gesucht werden. Die Texteingabe spielt allgemein im Fahrzeug vor allem eine große Rolle bei der Eingabe von Suchtexten oder Eingabetexten für Navigationsziele. Durch die Gefahr der Ablenkung vom Fahrgeschehen müssen die Texteingabemethoden effizient ausgelegt sein. Das heißt die Eingabe muss mit möglichst wenigen und einfachen Interaktionsschritten erfolgen, damit sie sicher während der Fahrt erfolgen kann. Der Einsatz von Handschrifterkennung 26 auf touch-interaktiven Flächen bietet Vorteile bei der blickabwendungsfreien Bedienung. Durch die Erfindung ist es ermöglicht, dass eine große Interaktionsfläche bereitgestellt wird, so dass der Benutzer mit dem Finger nicht lange zielen muss, um eine Handschrifteingabe zu tätigen. Des Weiteren kann er dasselbe Bedienfeld 28 nutzen, um auch einen Eingabevorschlag oder Auswahlvorschlag zu bestätigen. Hierdurch ergibt sich eine sehr schnelle Eingabe auf ein und demselben Bedienfeld 28. Die Eingabevorschläge können auch allgemeinere Ziele, wie beispielsweise Stadtzentrum oder auch das Überspringen beispielsweise der Eingabe einer Hausnummer, umfassen, da auch hier einfach ein entsprechender Auswahlvorschlag dazu gemacht werden muss, den der Benutzer wieder durch Antippen des Bedienfelds 28 bestätigen kann. Der Benutzer kann hier einfach aus einer Auswahlliste durch Antippen eines Listenelements eine Auswahl treffen oder durch Schreiben auf der Auswahlliste die Auswahlliste konkretisieren oder einschränken. Dies ist dadurch möglich, dass das erfindungsgemäß durch die Steuereinrichtung 24 bereitgestellte Bedienfeld 28 mehrere unterschiedliche Funktionalitäten vereint. Es ergibt sich eine effiziente Eingabe von Zeichen durch Handschrifterkennung 26, eine effiziente Übernahme von Vorschlägen oder Standardwerten, ein effizientes Überspringen von Eingabeschritten, eine Maximierung der Interaktionsfläche für die Handschrifteingabe und hierbei eine Reduktion von weiteren Interaktionsflächen ohne Reduktion von Funktionen.

Insgesamt ist somit ein Universal-Speller oder Handschrifterkenner mit Detailausprägung für unterschiedliche Kontexte wie Navigation und globale Suche bereitgestellt.

## Patentansprüche

1. Verfahren zum Betreiben einer Bedienvorrichtung (10) für eine Kraftfahrzeugkomponente (14, 16), wobei die Bedienvorrichtung (10) eine Anzeigeeinrichtung (18) sowie eine berührungssensitive Eingabefläche (20) aufweist und bei dem Verfahren eine Steuereinrichtung (24) auf der Anzeigeeinrichtung (18) zumindest einen Auswahlvorschlag (36, 52, 54) aus mehreren möglichen Eingabetexten (38) anzeigt und auf der berührungssensitiven Eingabefläche (20) ein Bedienfeld (28) zum Erfassen einer Eingabe eines Benutzers abgrenzt,
wobei
über das Bedienfeld (28) mehrere unterschiedliche Bedienfunktionen der Bedienvorrichtung (10) gesteuert werden, indem sowohl das Quittieren einer Auswahl durch Antippen als auch das Zeichnen eines neuen handschriftlichen Zeichens auf ein und demselben Bedienfeld (28) vorgesehen sind, wobei die Steuereinrichtung (24) eine Berührung der Eingabefläche (20) innerhalb des Bedienfelds (28) erkennt und dann nach einer vorbestimmten Zeitdauer überprüft, ob die Berührung nur das Antippen war und die erfasste Berührung beendet ist, und,
wenn die Berührung schon wieder nach dieser Zeitdauer beendet ist, einen vom Benutzer ausgewählten Auswahlvorschlag (36, 52, 54) als Eingabe an die Kraftfahrzeugkomponente (14, 16) ausgibt und,
wenn die Berührung dagegen länger als die Zeitdauer dauert, eine von dem Benutzer innerhalb des Bedienfelds (28) gezeichnete Zeichenspur (48, 48') erfasst,
wobei die Steuereinrichtung (24), wenn die Berührung länger als die Zeitdauer andauert, eine erste Feldgrenze (44) des Bedienfelds (28) auf eine zweite Feldgrenze (44') vergrößert, so dass dem Benutzer ein gegenüber dem bisherigen Bedienfeld (28) vergrößerter Teil der Eingabefläche (20), bis hin zu der gesamten Eingabefläche (20), zum Schreiben zur Verfügung steht und die Zeichenspur (48, 48') somit auch außerhalb der vormaligen, ersten Feldgrenze (44), aber innerhalb der neuen, zweiten Feldgrenze (44'), als gültig erfasst wird, bis die Handschrifteingabe durch einen Time-Out nach einem letzten Abheben des Fingers des Benutzers beendet wird, so dass als handschriftliche Zeichen auch Buchstaben mit mehreren Zeichenlinien und einem Abheben des Fingers zwischen den Zeichenlinien geschrieben werden können.

2. Verfahren nach Anspruch 1, wobei die Steuereinrichtung (24) auf der Anzeigeeinrichtung (18) mehrere Auswahlvorschläge (54) als eine Auswahlliste (50) anzeigt und beim Erfassen der Zeichenspur (48, 48') überprüft, ob die bisher erfasste Zeichenspur (48, 48') ein vorbestimmtes Gestenkriterium erfüllt, und gegebenenfalls in Abhängigkeit von der Zeichenspur (48, 48') eine Scrollfunktion der Auswahlliste (50) steuert.

3. Verfahren nach einem der vorhergehenden Ansprüche, wobei die Steuereinrichtung (24) die Zeichenspur (48, 48') einer Handschrifterkennung (26) zum Erkennen einer Zeicheneingabe zuführt und in Abhängigkeit von der erkannten Zeicheneingabe aus den Eingabetexten (38) zumindest einen neuen Auswahlvorschlag (52, 54) auswählt und auf der Anzeigeeinrichtung (18) anzeigt.

4. Verfahren nach einem der vorhergehenden Ansprüche, wobei die Steuereinrichtung (24) auf der Anzeigeeinrichtung (18) zumindest ein weiteres Bedienfeld (30, 32, 34) zum Aktivieren einer jeweiligen Zusatzfunktion anzeigt und das zumindest eine weitere Bedienfeld (30, 32, 34) verkleinert oder entfernt, um für das vergrößerte Bedienfeld (28) Platz zu schaffen.

5. Verfahren nach einem der Ansprüche 1 bis 3, wobei die Steuereinrichtung (24) auf der Anzeigeeinrichtung (18) zumindest ein weiteres Bedienfeld (30, 32, 34) zum Aktivieren einer jeweiligen Zusatzfunktion anzeigt und das zumindest eine weitere Bedienfeld (30, 32, 34) durch das vergrößerte Bedienfeld (28) überdeckt und, bevorzugt durch Ausgrauen, als inaktiv kennzeichnet.

6. Verfahren nach einem der vorhergehenden Ansprüche, wobei die Steuereinrichtung (24) zunächst nur einen einzelnen Auswahlvorschlag anzeigt (c), welcher bei Antippen der Bedienfläche (28) einen Standardtext (36) oder einen Befehl zum Überspringen der Auswahlprozedur (64') als die Eingabe festlegt, und, falls der Benutzer anstelle des Antippens eine Zeichenspur (48) innerhalb der Bedienfläche (28) zeichnet (d), mittels einer Handschrifterkennung (26) einen Anfangs-Wortbestandteil ermittelt und dann aus den Eingabetexten (38) neue Auswahlvorschläge (54) ermittelt, von denen jeder mit dem Anfangs-Wortbestandteil beginnt, und die neuen Auswahlvorschläge (54) auf der Anzeigeeinrichtung (18) anzeigt (e) und dann überprüft, ob der Benutzer entweder durch Antippen der Bedienfläche (28) einen der neuen Auswahlvorschläge (54) auswählt oder durch eine Zeichenspur (48') einen weiteren Wortbestandteil zum Einschränken der Menge der neuen Auswahlvorschläge (54) festlegt, wobei die Steuereinrichtung (24) im letzteren Fall danach nur noch solche Auswahlvorschläge anzeigt, die sowohl den Anfangs-Wortbestandteil als auch den weiteren Wortbestandteil aufweisen.

7. Verfahren nach einem der vorhergehenden Ansprüche, wobei die Eingabe als eine Navigationszieleingabe an ein Navigationsgerät (14) oder als Suchadresse an eine Adressdatenbank oder eine Telefondatenbank (16) ausgegeben wird.

8. Bedienvorrichtung (10) für eine Kraftfahrzeugkomponente (14, 16), wobei die Bedienvorrichtung (10) eine Anzeigeeinrichtung (18) sowie eine berührungssensitive Eingabefläche (20) aufweist,
**gekennzeichnet durch**
eine Steuereinrichtung (24), die dazu ausgelegt ist, ein Verfahren nach einem der vorhergehenden Ansprüche durchzuführen.

9. Bedienvorrichtung (10) nach Anspruch 8, wobei die Anzeigeeinrichtung (18) und die Eingabefläche (20) gemeinsam durch ein Touchscreen bereitgestellt sind.

10. Bedienvorrichtung (10) nach Anspruch 8 oder 9, wobei die Bedienvorrichtung (10) ein portables Kommunikationsgerät ist.

11. Kraftfahrzeug (12) mit einer Bedienvorrichtung (10) nach Anspruch 8 oder 9.

12. Datenträger mit einem darin gespeicherten Programmcode, der dazu ausgelegt ist, bei Ausführen durch eine Prozessoreinrichtung eines portablen Kommunikationsgeräts ein Verfahren nach einem der Ansprüche 1 bis 7 durchzuführen.

## Claims

1. A method for operating an operator control apparatus (10) for a motor vehicle component (14, 16), wherein the operator control apparatus (10) has a display device (18) and a touch-sensitive input panel (20) and in the method a control device (24) displays at least one selection proposal (36, 52, 54) from several possible input texts (38) on the display device (18) and on the touch-sensitive input panel (20) delimits an operator control area (28) for capturing an input from a user,
wherein
a plurality of different operator control functions of the operator control apparatus (10) are controlled via the operator control area (28), in that both the confirmation of a selection by tapping as well as the drawing of a new handwritten character on one and the same operator control area (28) are provided, wherein the control device (24) identifies a contact with the input panel (20) within the operator control area (28) and then after a predetermined period of time checks whether the contact was a merely the tap and the detected contact is ended, and,
if the contact is already ended again after this period of time, outputs a selection proposal (36, 52, 54) selected by the user as an input to the motor vehicle component (14, 16) and
if the contact, however, lasts longer than the period of time, captures a character mark (48, 48') drawn by the user within the operator control area (28),
wherein
the control device (24), if the contact persists longer than the period of time, enlarges the first field boundary (44) of the operator control area (28) to a second field boundary (44'), so that a part of the input panel (20) enlarged relative to the previous operator control area (28), up to the entire input panel (20), is available to the user for writing and the character mark (48, 48') is thus detected as valid also outside of the former, first field boundary (44), but within the new, second field boundary (44'),
until
the handwriting input is ended by a time-out after a last lifting of the finger of the user, so that also letters with several character lines and a lifting of the finger between the character lines can be written as handwritten characters.

2. The method according to Claim 1, wherein the control device (24) displays a plurality of selection proposals (54) on the display device (18) as a selection list (50) and when the character mark (48, 48') is detected checks whether the previously detected character mark (48, 48') satisfies a predetermined gesture criterion, and, if necessary, controls a scroll function of the selection list (50) depending on the character mark (48, 48').

3. The method according to any one of the preceding claims, wherein the control device (24) supplies the character mark (48, 48') to a handwriting recognizer (26) for recognizing a character input and depending on the recognized character input from the input texts (38) selects at least one new selection proposal (52, 54) and displays it on the display device (18).

4. The method according to any one of the preceding claims, wherein the control device (24) displays at least one further operator control area (30, 32, 34) on the display device (18) for activating a respective auxiliary function and decreases or removes the at least one further operator control area (30, 32, 34), in order to make room for the enlarged operator control area (28).

5. The method according to any one of Claims 1 to 3, wherein the control device (24) displays at least one further operator control area (30, 32, 34) on the display device (18) for activating a respective auxiliary function and covers the at least one further operator control area (30, 32, 34) by the enlarged operator control area (28) and, preferably by graying it out, identifies it as inactive.

6. The method according to any one of the preceding claims, wherein the control device (24) initially only displays (c) a single selection proposal, which when the operator control panel (28) is tapped defines a standard text (36) or a command to skip the selection procedure (64') as the input, and, if the user instead of tapping draws (d) a character mark (48) within the operator control panel (28), by means of a handwriting recognizer (26) determines an initial word component and then from the input texts (38) determines new selection proposals (54), each of which begins with the initial word component, and displays (e) the new selection proposals (54) on the display device (18) and then checks whether the user either by tapping the operator control panel (28) selects one of the new selection proposals (54) or by a character mark (48') defines a further word component for restricting the amount of new selection proposals (54), wherein the control device (24) in the latter case then only displays such selection proposals, which have both the initial word component as well as the further word component.

7. The method according to any one of the preceding claims, wherein the input is output as a navigation destination input to a navigation device (14) or as a search address to an address database or a telephone database (16).

8. An operator control apparatus (10) for a motor vehicle component (14, 16), wherein the operator control apparatus (10) has a display device (18) and a touch-sensitive input panel (20),
**characterized by**
a control device (24), which is configured to carry out a method according to any one of the preceding claims.

9. The operator control apparatus (10) according to Claim 8, wherein the display device (18) and the input panel (20) are provided jointly by a touch screen.

10. The operator control apparatus (10) according to Claim 8 or 9, wherein the operator control apparatus (10) is a portable communication device.

11. The motor vehicle (12) with an operator control apparatus (10) according to Claim 8 or 9.

12. A data carrier with a program code stored therein, which is configured, to carry out the method according to any one Claims 1 to 7 when carried out by a processor device of a portable communication device.

## Revendications

1. Procédé d'exploitation d'un dispositif de commande (10) pour un composant de véhicule automobile (14, 16), le dispositif de commande (10) comprenant un dispositif d'affichage (18) ainsi qu'une surface d'entrée tactile (20) et dans lequel un dispositif de contrôle (24) affiche, sur le dispositif d'affichage (18), au moins une proposition de sélection (36, 52, 54) par mi plusieurs textes d'entrée possibles (38) et délimite, sur la surface d'entrée tactile (20), un champ de commande (28) pour la saisie d'une entrée d'un utilisateur,
moyennant quoi,
par l'intermédiaire du champ de commande (28), plusieurs fonctions de commande du dispositif de commande (10) peuvent être contrôlées, grâce au fait que la validation d'une sélection par tapotage ainsi que le tracé d'un nouveau caractère manuscrit sont prévus sur un seul et même champ de commande (28), le dispositif de contrôle (24) reconnaissant un contact avec la surface d'entrée (20) à l'intérieur du champ de commande (28) puis vérifiant, après une durée prédéterminée, si le contact était seulement le tapotage et si le contact détecté est terminé et
lorsque le contact est terminé après cette durée, émettant une proposition de sélection (36, 52, 54) sélectionnée par l'utilisateur en tant qu'entrée vers le composant de véhicule automobile (14, 16) et
lorsque le contact, en revanche, dure plus longtemps que la durée, détectant un tracé de caractère (48, 48') tracé par l'utilisateur à l'intérieur du champ de commande (28),
moyennant quoi
le dispositif de contrôle (24), lorsque le contact dure plus longtemps que la durée, agrandit une première limite de champ (44) du champ de commande (28) à une deuxième limite de champ (44'), de façon à ce que, l'utilisateur dispose, pour l'écriture, d'une partie de la surface d'entrée (20) agrandie par rapport au champ de commande (28) précédent, jusqu'à toute la surface d'entrée (20), et à ce que le tracé de caractère (48, 48') soit donc détecté comme valable également à l'extérieur de la première limite de champ (44) précédente, mais à l'intérieur de la deuxième limite de champ (44'), jusqu'à ce que l'entrée manuscrite soit terminée par un time-out après un dernier soulèvement du doigt de l'utilisateur, de façon à ce que, en tant que caractères manuscrits, des lettres avec plusieurs lignes de caractères et un soulèvement du doigt entre les lignes de caractères puissent être écrites.

2. Procédé selon la revendication 1, le dispositif de contrôle (24) affichant sur le dispositif d'affichage (18) plusieurs propositions de sélection (54) sous la forme d'une liste de sélection (50) et, lors de la détection du tracé de caractères (48, 48'), vérifiant si le tracé de caractères (48, 48') détecté précédemment remplit un caractère de geste prédéterminé et, le cas échéant, contrôlant, en fonction du tracé de caractère (48, 48'), une fonction de défilement de la liste de sélection (50).

3. Procédé selon l'une des revendications précédentes, le dispositif de contrôle (24) introduisant le tracé dé caractère (48, 48') dans une reconnaissance de d'écriture (26) pour la reconnaissance d'une entrée de caractère et, en fonction de l'entrée de caractère reconnue, sélectionnant, à partir des textes d'entrée (38), au moins une nouvelle proposition de sélection (52, 54) et l'affichant sur le dispositif d'affichage (18).

4. Procédé selon l'une des revendications précédentes, le dispositif de contrôle (24) affichant sur le dispositif d'affichage (18) au moins un autre champ de commande (30, 32, 34) pour l'activation de la fonction supplémentaire correspondante et réduisant ou supprimant l'au moins un autre champ de commande (30, 32, 34) afin de faire de la place pour le champ de commande agrandi (28).

5. Procédé selon l'une des revendications 1 à 3, le dispositif de contrôle (24) affichant sur le dispositif d'affichage (18) au moins un autre champ de commande (30, 32, 34) pour l'activation de la fonction supplémentaire correspondante et recouvrant l'au moins un autre champ de commande (30, 32, 34) par le champ de commande agrandi (28) et l'identifiant comme inactif, par exemple en le grisant.

6. Procédé selon l'une des revendications précédentes, le dispositif de contrôle (24) affichant (c) d'abord une seule proposition de sélection, qui fixe, lors du tapotage de la surface de commande (28), un texte standard (36) ou une instruction pour le saut de la procédure de sélection (64') en tant qu'entrée et, si l'utilisateur, au lieu du tapotage, trace (d) un tracé de caractère (48) à l'intérieur de la surface de commande (28), détermine, au moyen d'une reconnaissance d'écriture (26), une partie de mot initiale puis, à partir des textes d'entrée (38), détermine de nouvelles propositions de sélection (54), dont chacune commence par la partie de mot initiale et affiche (e) les nouvelles propositions de sélection (54) sur le dispositif d'affichage (18) puis vérifie si l'utilisateur sélectionne, par tapotage de la surface de commande (28), une des nouvelles propositions de sélection (54) ou fixe, par un tracé de caractères (48'), une autre partie de mot pour restreindre la quantité de nouvelles propositions de sélection (54), le dispositif de contrôle (24) affichant ensuite, dans ce dernier cas, uniquement les propositions de sélection qui comprennent aussi bien la partie de mot initiale que la partie de mot supplémentaire.

7. Procédé selon l'une des revendications précédentes, l'entrée étant affichée comme une entrée de destination sur un appareil de navigation (14) ou comme une adresse de recherche dans une base de données d'adresses ou une base de données téléphonique (16).

8. Dispositif de commande (10) pour un composant de véhicule automobile (14, 16), le dispositif de commande (10) comprenant un dispositif d'affichage (18) ainsi qu'une surface d'entrée tactile (20),
**caractérisé par**
un dispositif de contrôle (24) qui est conçu pour exécuter un procédé selon l'une des revendications précédentes.

9. Dispositif de commande (10) selon la revendication 8, le dispositif d'affichage (18) et la surface d'entrée (20) étant constituées conjointement d'un écran tactile.

10. Dispositif de commande (10) selon la revendication 8 ou 9, le dispositif de commande (10) étant un appareil de communication portatif.

11. Véhicule automobile (12) avec un dispositif de commande (10) selon la revendication 8 ou 9.

12. Support de données avec un code de programme enregistré à l'intérieur, qui est conçu, lors de l'exécution par un dispositif de processeur d'un appareil de communication portatif, pour exécuter un procédé selon l'une des revendications 1 à 7.
